# EUROPÄISCHE PATENTANMELDUNG

(11) **EP 1 724 049 A1**
(43) Veröffentlichungstag der Anmeldung: **22.11.2006**
(21) Anmeldenummer: 05009430.9
(22) Anmeldetag: 04.05.2005
(51) Int. Cl.: B23K 35/02

(54) **Schichtlot**

(71) Anmelder: Umicore AG & Co. KG, 63457 Hanau (DE)
(72) Erfinder: Stroiczek, Martin, 63486 Bruchköbel (DE); Schmoor, Hartmut, 63457 Hanau (DE)
(74) Vertreter: Herrmann, Reinhard

(57) **Zusammenfassung**

Schichtlote in Bandform werden zum Beispiel zum Auflöten von Schneidezähnen aus Hartmetallen auf metallische Grundkörper benötigt. Eine typische Anwendung ist die Herstellung von Sägeblättern durch Auflöten von Schneidezähnen auf entsprechende Stammblätter aus Stahl. Das Schichtlot besteht aus einer Einlage aus Kupfer mit beidseitig plattierten Folien aus Lotlegierung. Die Kupfereinlage soll dabei die durch die unterschiedlichen thermischen Ausdehnungskoeffizienten bei der Abkühlung nach dem Löten hervorgerufenen Spannungen zwischen Hartmetall und dem Stammblatt aus Stahl ausgleichen und Rißbildungen im Hartmetall verhindern.

Wie sich gezeigt hat, kommt es bei der Anwendung von so hergestellten Sägeblättern gelegentlich zu Ausfällen durch Abreißen eines Schneidezahnes. Der damit verbundene Maschinenstillstand und das Nachlöten des einzelnen Zahnes in Handarbeit erzeugt hohe Kosten. Der Abriß erfolgt dabei in der Kupfereinlage. Erfindungsgemäß werden solche Ausfälle nahezu vollständig vermieden, wenn statt der Kupfereinlage eine Einlage aus einer aushärtbaren Kupferlegierung verwendet wird.

## Beschreibung

Die Erfindung betrifft ein Schichtlot in Bandform zum Auflöten von Hartmetallteilen mit niedrigem thermischen Ausdehnungskoeffizienten auf metallische Unterlagen. Das Schichtlot besteht gewöhnlich aus einer Kupfereinlage mit beidseitig plattierten Folien aus einer Lotlegierung.

Bei der Herstellung von Werkzeugen für die schneidende beziehungsweise spanende Bearbeitung, wie etwa Sägeblättern, Bohrern und Fräsen werden die als Schneiden dienenden Hartmetallteile, dies sind meist Verbundwerkstoffe aus Karbiden wie WC, TiC, TaC in einer Matrix aus Co, Ni oder Fe, auf die metallische Unterlage, die in der Regel aus Stahl besteht, aufgelötet.

Das thermische Ausdehnungsverhalten der beteiligten Werkstoffe wird durch den mittleren thermischen Ausdehnungskoeffizienten α beschrieben. Dieser liegt für Hartmetalle durchschnittlich bei einem Wert von 4 bis 7 x 10⁻⁶/K und unterscheidet sich damit deutlich von dem der Grundkörper, die in der Regel aus Stählen mit einem Koeffizienten α von 11 bis 12 x 10⁻⁶/K hergestellt werden.

Aufgrund der stark unterschiedlichen thermischen Ausdehnungskoeffizienten von Hartmetall und Stahl entstehen beim Abkühlen durch die behinderte thermische Schrumpfung Spannungen, die zum Verzug des Bauteils und zu Rissen im Hartmetall führen können. Bei Löttemperatur ist der Verbund zunächst spannungsfrei. Während der Abkühlung schrumpft der Stahl doppelt so stark wie das Hartmetall. Dadurch kommt es zu einem Durchbiegen des Bauteils. In Folge entstehen im Oberflächenbereich des Hartmetalls Zugspannungen, die im ungünstigen Fall zu Rißbildungen führen und die Lebensdauer des Werkzeugs herabsetzen oder den Werkzeugeinsatz unmöglich machen können.

Die Verminderung dieser inneren Spannungen und damit der Schutz des Hartmetalls gegen Ablösung oder Zerstörung wird heute dadurch erreicht, daß Lotbänder eingesetzt werden, die eine Einlage aus Kupfer mit Dicken von 0,1 bis 0,5 mm zwischen zwei Folien aus Lotlegierung besitzen. Die mittlere Kupferschicht trägt über ihr plastisches Formänderungsvermögen zum Spannungsabbau bei. Solche Lotbänder werden auch als Schichtlote bezeichnet. Sie werden zum Beispiel durch beidseitiges Plattieren der die Einlage bildenden Kupferfolie mit Folien aus der Lotlegierung hergestellt.

Die zum Spannungsabbau dienende Kupferschicht stellt im gelöteten Werkstoffverbund eine Schwachstelle dar. Im Falle extremer Belastungen versagen die Bauteile durch Abriß in der Kupfereinlage.

Alternativ zu Schichtloten mit Kupfereinlage schlägt die DE 197 42 030 C2 vor, die Rißbildung durch Spannungsabbau in einer dicken Lotschicht zu vermindern. Hierzu wird in das Lotband ein Drahtgewebe aus einem Metall oder einer Metallegierung eingelegt, dessen Schmelzpunkt über dem Schmelzpunkt der Lotlegierung liegt. Das Drahtgewebe dient somit als Abstandshalter und garantiert eine Mindestdicke des Lotspaltes nach der Abkühlung des gelöteten Bauteiles. Die quer zur Bandrichtung des Lotbandes verlaufenden Schußdrähte des Drahtgewebes bestehen aus Nickel, Nickelbasislegierungen, Kupfer, Kupferbasislegierungen oder Silber und Silberbasislegierungen. Bevorzugt wird eine CuNi30Fe-Legierung mit 30 Gew.-% Nickel, bezogen auf das Gesamtgewicht der Legierung, eingesetzt. In der DE 198 06 380 A1 wird vorgeschlagen die Schußdrähte durch quer zur Bandrichtung und in einem Abstand zueinander liegende Metallplättchen zu ersetzen, deren Schmelzpunkt ebenfalls über dem Schmelzpunkt der Lotlegierung liegt. Als Material für diese Plättchen werden dieselben Metalle und Legierungen wie für die Schußdrähte der DE 197 42 030 C2 vorgeschlagen.

Auch die Schichtlote gemäß der DE 197 42 030 C2 und DE 198 06 380 A1 können nicht verhindern, daß es gelegentlich zu Abrissen von Schneidezähnen im Gebrauch der Sägen kommt. Aufgabe der vorliegenden Erfindung war es daher, ein verbessertes Schichtlot zur Verfügung zu stellen, welches ein Abreißen der Hartmetall-Schneidezähne von Sägen im Gebrauch weitgehend verhindert.

Diese Aufgabe wird durch ein Schichtlot in Bandform gelöst, bei dem sich in einer Lotmatrix eine Einlage aus einem höherschmelzenden Metall befindet welches sich einerseits beim Abkühlen nach dem Lötprozeß plastisch verformt und dadurch Spannungen im Lotverbund abbaut und andererseits im Betriebszustand des Bauteiles eine höhere Endfestigkeit als herkömmliche Schichtlote aufweist. Erfindungsgemäß handelt es sich bei der Einlage um eine aushärtbare Kupferlegierung.

Die aushärtbaren Kupferlegierungen besitzen bei Löttemperatur eine dem reinen Kupfer ähnliche Härte und erreichen aber durch Aushärtungsvorgänge nach der Abkühlung eine höhere Scherfestigkeit.

Im Rahmen der Erfindung wurden von den Erfindern verschiedene Kupferlegierungen untersucht. Dabei haben sich die im folgenden beschriebenen Legierungstypen als für die Zwecke der Erfindung geeignet erwiesen. In den Legierungen enthaltene Verunreinigungen sollten 0,1, bevorzugt 0,05 Gew.-% nicht übersteigen.

Besonders geeignet sind die aushärtbaren Legierungen CuNiSi und CuNiFe. Bevorzugt enthalten die CuNiSi-Legierungen 0,1 bis 10 Gew.-% Nickel, 0,1 bis 10 Gew.-% Silizium und Rest Kupfer und die CuNiFe-Legierungen 0,1 bis 10 Gew.-% Nickel, 0,1 bis 10 Gew.- % Eisen und Rest Kupfer, wobei diese Legierungen gegebenenfalls noch bis zu 2 Gew.-% Mangan enthalten können. Bevorzugt liegen die Gewichtsanteile der Legierungszusätze Nickel und Silizium in den CuNiSi-Legierungen sowie von Nickel und Eisen in den CuNiFe-Legierungen zwischen 0,1 und 5 Gew.-%.

Als weitere Kupferlegierungen sind aushärtbare Legierungen des Kupfers mit einem oder mehreren Legierungszusätzen ausgewählt aus der Gruppe bestehend aus Titan, Zirkon, Hafnium, Chrom, Nickel, Silizium, Beryllium, Cadmium und Tellur für die Erfindung geeignet, wobei die Konzentration der einzelnen Legierungszusätze bevorzugt jeweils zwischen 0,05 bis 3 Gew.-% beträgt.

Weiterhin sind aushärtbare Kupferlegierungen geeignet, die neben Kupfer 1 bis 15 Gew.-% Zinn und 1 bis 30 Gew.-% Nickel enthalten oder Legierungen des Kupfers mit 10 bis 20 Gew.-% Indium oder mit 2 bis 15 Gew.-% Mangan und 0,1 bis 8 Gew.-% Silizium. Ebenfalls geeignet sind aushärtbare Legierungen aus Kupfer mit 15 bis 25 Gew.-% Mangan und 15 bis 25 Gew.-% Nickel.

Die aushärtbaren Kupferlegierungen weisen im lösungsgeglühten Zustand eine hohe Zähigkeit auf, die für einen guten Spannungsabbau während der Abkühlung nach dem Löten sorgt. Während der Abkühlung kommt es zu Ausscheidungen von Phasen der Legierungskomponenten, wie z.B. Ni₂Si bei der Legierung CuNiSi (Ni 0,1% bis 10%, Si 0,1% bis 10%), welche mit abnehmender Temperatur zu einer Ausscheidungshärtung und damit Verfestigung des Lotverbundes führt.

Verwendet man dagegen nicht aushärtbare Kupferlegierungen wie z.B. CuNi30Fe werden zwar höhere Scherfestigkeiten erreicht, allerdings wird im Lötverbund kein hinreichender Spannungsabbau sichergestellt.

Bei dem erfindungsgemäßen Schichtlot können als Lotmatrix im Prinzip alle üblichen Hartlote mit Liquidustemperaturen die unterhalb der Solidustemperatur der Einlage der aushärtbaren Kupferbasislegierungen eingesetzt werden. Bevorzugt sind Standard-Hartlotlegierungen etwa der Basis-Systeme CuAg, AgCuZn, AgCuZnCd, AgCuZnMnNi, AgCuZnMnNi(Cd), AgCuMnNi, und deren Legierungen mit Zusätzen von In, Ge oder Ga. Typischerweise werden Legierungen wie zum Beispiel das AG502 nach EN 1044 eingesetzt. Diese Lotlegierungen schmelzen bei einer Löttemperatur von ca. 700 °C.

Die Herstellung des erfindungsgemäßen Schichtlots erfolgt in der Weise, daß die höherschmelzende, aushärtbare Kupferlegierung beidseitig mit einer Folie aus einer niedriger schmelzenden Lotlegierung plattiert und hieraus dann Bänder in anwendungsspezifischer Breite geschnitten oder anwendungsspezifische Formteile gestanzt werden.

Bei dem erfindungsgemäßen Schichtlot liegt die Gesamtdicke zweckmäßigerweise zwischen 0,15 und 2,0 mm, wobei die Einlage eine Dicke von 0,05 bis 1,8, bevorzugt von 0.05 bis 0,8 mm, aufweist. Gut bewährt haben sich Schichtlote, bei denen die Dicke der Einlage gleich der Summe der Dicken der beiden aufplattierten Lotfolien beträgt. Zweckmäßigerweise weisen die beiden Lotfolien die gleiche Dicke auf.

Die Erfindung wird an Hand der folgenden Beispiele näher erläutert. Es zeigen
**Figur 1:** Rißbildung im Hartmetall nach dem Lötprozeß
**Figur 2:** Schichtlot mit Kupferzwischenschicht
**Figur 3:** Rißbildung in der Kupferzwischenschicht

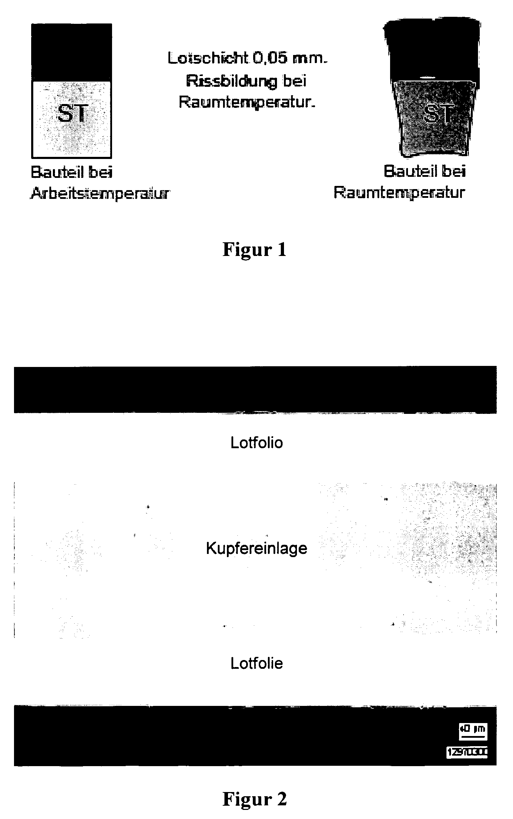

Figur 1 zeigt schematisch die Ausbildung von Rissen im Hartmetall (HM) nach dem Auflöten auf eine Stahlunterlage (ST). Bei Arbeitstemperatur liegt das Hartmetall ohne Verspannungen auf der Stahlunterlage. Nach Abkühlung auf Raumtemperatur kommt es durch die stärkere Schrumpfung der Stahlunterlage zu einer konvexen Verbiegung des Verbundes aus Hartmetall und Stahlunterlage und zu einer Rißbildung im Hartmetall auf der der Stahlunterlage abgewandten Oberfläche.

Figur 2 zeigt ein Schichtlot im Querschliff. Die Einlage aus Kupfer oder der erfindungsgemäßen Kupferlegierung befindet sich zwischen den beiden aufplattierten Lotfolien. Gewöhnlich ist die Dicke der Einlage doppelt so groß wie die Dicke der Lotfolien.

### Vergleichsbeispiel 1

Es wurde ein Kreissägeblatt durch Auflöten von Schneidezähnen aus der Hartmetallegierung K20 (nach DIN 4990) auf ein Stammblatt aus Stahl unter Verwendung eines konventionellen Schichtlotes hergestellt.

Das Schichtlot enthielt zwischen zwei Lotfolien aus Ag49Cu27,5Zn20,5Mn2,5Ni0,5 eine Einlage aus reinem Kupfer. Beide Lotfolien wiesen eine Dicke von jeweils 0,075 mm und die Kupfereinlage eine Dicke von 0,15 mm auf. Die Gesamtdicke des Verbundes betrug 0,3 mm. Die Arbeitstemperatur dieses Schichtlotes lag bei 690 °C.

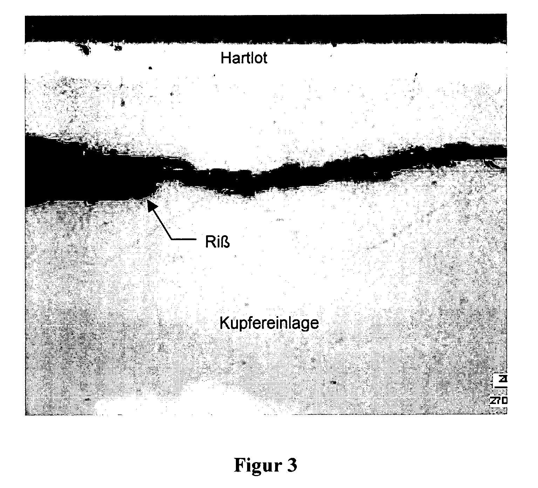

Die Kreissäge fiel im Gebrauch durch den beginnenden Abriß eines Sägezahnes aus. Der Querschliff der Lötverbindung ist in Figur 3 gezeigt. Die Verbindung versagte durch Rißbildung in der Kupfereinlage.

### Beispiel 1

Es wurde ein weiteres Kreissägeblatt hergestellt. Zum Auflöten der Schneidezähne wurde ein erfindungsgemäßes Schichtlot verwendet. Das Schichtlot unterschied sich von dem Schichtlot des Vergleichsbeispiels durch Verwendung der aushärtbaren Legierung CuNi2,5Si0,6 für die Einlage.

Die Kreissäge zeigte keinerlei Abreißen von Schneidezähnen auch nicht nach extremer Belastung.

### Beispiel 2

Es wurde ein weiteres Kreissägeblatt hergestellt. Zum Auflöten der Schneidezähne wurde ein erfindungsgemäßes Schichtlot verwendet. Das Schichtlot unterschied sich von dem Schichtlot des Vergleichsbeispiels durch Verwendung der aushärtbaren Legierung CuNi5Fe1Mn0,5 für die Einlage.

Die Kreissäge zeigte keinerlei Abreißen von Schneidezähnen auch nicht nach extremer Belastung.

### Messung der Scherfestigkeit und der Spannungen in Lotverbindung

Messungen der Scherfestigkeit der Lotverbindungen ergaben, daß mit den erfindungsgemäßen Schichtloten eine gegenüber dem konventionellen Schichtlot um mehr als 20 % verbesserte Scherfestigkeit erhalten wurde. Überraschenderweise zeigte sich bei Messungen der internen Spannungen mittels Röntgenbeugung, daß trotz erhöhter Scherfestigkeit die Spannungen in den Lotverbindungen der erfindungsgemäßen Schichtlote um mehr als 20 % geringer waren als die Spannungen in der Lotverbindung des konventionellen Schichtlotes.

## Patentansprüche

1. Schichtlot in Bandform mit schichtartigem Aufbau, bei dem sich in einer Lotmatrix eine Einlage aus einem höherschmelzendem Metall befindet,
**dadurch gekennzeichnet,**
**daß** die Einlage eine aushärtbare Kupferlegierung enthält.

2. Schichtlot nach Anspruch 1,
**dadurch gekennzeichnet,**
**daß** die Einlage aus einer CuNiSi-Legierung besteht, die 0,1 bis 10 Gew.-% Nickel, 0,1 bis 10 Gew.-% Silizium und Rest Kupfer enthält.

3. Schichtlot nach Anspruch 1,
**dadurch gekennzeichnet,**
**daß** die Einlage aus einer CuNiFe-Legierung besteht, die 0,1 bis 10 Gew.-% Nickel, 0,1 bis 10 Gew.- % Eisen, gegebenenfalls bis zu 2 Gew.-% Mangan und Rest Kupfer enthält.

4. Schichtlot nach Anspruch 1,
**dadurch gekennzeichnet,**
**daß** die Einlage Kupfer mit einem oder mehreren Legierungszusätzen ausgewählt aus der Gruppe bestehend aus Titan, Zirkon, Hafnium, Chrom, Nickel, Silizium, Beryllium, Cadmium und Tellur enthält.

5. Schichtlot nach Anspruch 4,
**dadurch gekennzeichnet,**
**daß** die ausgewählten Legierungszusätze jeweils in einer Konzentration von 0,05 bis 3 Gew.-% vorliegen.

6. Schichtlot nach Anspruch 1,
**dadurch gekennzeichnet,**
**daß** die Einlage ein Legierung aus Kupfer mit 1 bis 15 Gew.-% Zinn und 1 bis 30 Gew.-% Nickel enthält.

7. Schichtlot nach Anspruch 1,
**dadurch gekennzeichnet,**
**daß** die Einlage eine Legierung aus Kupfer mit 10 bis 20 Gew.-% Indium ist.

8. Schichtlot nach Anspruch 1,
**dadurch gekennzeichnet,**
**daß** die Einlage eine Legierung aus Kupfer mit 2 bis 15 Gew.-% Mangan und 0,1 bis 8 Gew.-% Silizium ist.

9. Schichtlot nach Anspruch 1,
**dadurch gekennzeichnet,**
**daß** die Einlage eine Legierung aus Kupfer mit 15 bis 25 Gew.-% Mangan und 15 bis 25 Gew.-% Nickel ist.

10. Schichtlot nach einem der vorstehenden Ansprüche,
**dadurch gekennzeichnet,**
**daß** die Lotmatrix eine Standard-Hartlotlegierung, vorzugsweise der Basis-Systeme CuAg, AgCuZn, AgCuZnCd, AgCuZnMnNi, AgCuZnMnNi(Cd), AgCuMnNi und deren Legierungen mit Zusätzen von Indium, Germanium oder Gallium enthält.

11. Schichtlot nach Anspruch 10,
**dadurch gekennzeichnet,**
**daß** das Schichtlot eine Gesamtdicke von 0,15 bis 2,0 mm und eine Dicke der Einlage von 0,05 bis 1,8 mm aufweist.

12. Verfahren zur Herstellung eines Schichtlots nach Anspruch 11,
**dadurch gekennzeichnet,**
**daß** man eine Folie der Einlage beidseitig mit einer Folie aus der Lotmatrix plattiert und hieraus dann Bänder in anwendungsspezifischer Breite schneidet.

13. Verfahren zur Herstellung eines Schichtlots nach Anspruch 11,
**dadurch gekennzeichnet,**
**daß** man eine Folie der Einlage beidseitig mit einer Folie aus der Lotmatrix plattiert und hieraus dann Formteile in anwendungsspezifischen Abmessungen stanzt.

14. Verwendung der Schichtlote nach einem der Ansprüche 12 und 13 zum Auflöten von Hartmetallteilen auf metallische Unterlagen.
